# EUROPEAN PATENT APPLICATION

(11) **EP 4 648 384 A1**
(43) Date of publication of application: **12.11.2025**
(21) Application number: 24174880.5
(22) Date of filing: 08.05.2024
(51) Int. Cl.: H04L 65/102, H04L 67/12, H04L 67/2885, H04W 4/08, H04W 4/80, G07C 9/00

(54) **CONFIGURING COMMUNICATION**

(71) Applicant: Assa Abloy Limited, Willenhall, West Midlands WV13 3PW (GB)
(72) Inventor: EINBERG, Fredrik, Huddinge (SE); GRANDA, Michal, Gliwice (PL)
(74) Representative: Kransell & Wennborg KB

(57) **Abstract**

It is provided a method for configuring communication between a first device (11) and a second device (12) of an access control system (9), the first device (11) being one of an end device (1) and a communication hub (2), and the second device (12) being the other of the end device (1) and the communication hub (2). The method comprises: obtaining (40) configuration data comprising a first group identifier; configuring (42) the first device (11) to be associated with the first group identifier; obtaining (44) a second group identifier by communicating with the second device (12), wherein the second group identifier is a group identifier for the second device (12); determining (46) that the first group identifier and the second group identifier match; and configuring (48) the first device (11) to perform future communication with the second device (12) over a local wireless communication interface.

## Description

### TECHNICAL FIELD

The present disclosure relates to the field of access control system and in particular to configuration of communication between devices in such a system.

### BACKGROUND

Locks and keys are evolving from the traditional pure mechanical locks. These days, electronic locks are becoming increasingly common. For electronic locks, no mechanical key profile is needed for authentication of a user. The electronic locks can e.g. be opened using an electronic key stored on a special carrier (fob, card, etc.) or in a smartphone or wearable device. The electronic key and electronic lock can e.g. communicate over a wireless interface. Such electronic locks provide a number of benefits, including improved flexibility in management of access rights, audit trails, key management, etc.

Electronic locks in access control systems are sometimes given connectivity using a communication hub. For instance, the communication hub can enable the electronic locks to communicate with a controller for making an access decision for an electronic key that is presented to the electronic lock. Other devices, such as sensors, may also need to communicate via the communication hub. Herein, all such devices that communicate via the communication hub are denoted end devices.

For the communication to function, each end device needs to be configured to communicate with its particular communication hub. When network topology is based on physical installation locations, the configuration with the relationship between end device and communication hub is explicitly defined. In the prior art, this configuration is cumbersome, or requires fully online connectivity of all concerned devices to be performed.

### SUMMARY

One object is to provide a way to configure devices of an access control system which is convenient and that does not rely on online connectivity at the time of configuring the devices.

According to a first aspect, it is provided a method for configuring communication between a first device and a second device, the first device being one of an end device and a communication hub, and the second device being the other of the end device and the communication hub. The first device and the second device are both part of an access control system. The method comprises: obtaining, by the first device, configuration data comprising a first group identifier, being a group identifier for the first device; configuring, by the first device, the first device to be associated with the first group identifier; obtaining, by the second device, configuration data comprising a second group identifier, being a group identifier for the second device; configuring, by the second device, the second device to be associated with the second group identifier; obtaining, by the first device, the second group identifier by communicating, over a wireless communication link, with the second device; determining that the first group identifier and the second group identifier match; configuring, by the first device, the first device to perform future communication with the second device over a local wireless communication interface; and configuring, by the second device, the second device to perform future communication with the first device over the local wireless communication interface.

According to a second aspect, it is provided a method for configuring communication between a first device and a second device, the first device being one of an end device and a communication hub, and the second device being the other of the end device and the communication hub. The first device and the second device are both part of an access control system. The method being performed by the first device. The method comprises: obtaining configuration data comprising a first group identifier, being a group identifier for the first device; configuring the first device to be associated with the first group identifier; obtaining a second group identifier by communicating, over a wireless communication link, with the second device, wherein the second group identifier is a group identifier for the second device; determining that the first group identifier and the second group identifier match; and configuring the first device to perform future communication with the second device over a local wireless communication interface.

The obtaining configuration data may comprise obtaining configuration data over a local communication interface from a configuration device.

The communicating to obtain the second group identifier may comprise transmitting a request to the second device.

The communicating to obtain the second group identifier may comprise receiving a broadcast message from the second device, wherein the broadcast message comprises the second group identifier.

The group identifiers of the first device and the second device may bepart of a configuration of a topology of the access control system.

The end device may be one of: an electronic lock, an access control reader, a sensor device, and a camera device.

The method may further comprise: receiving a request for a configuration status; determining a current configuration status, specifying that the first device is configured to perform communication with the second device; and providing the current configuration status.

The first device may be the end device, in which case the second device is be the communication hub, wherein the configuring comprises configuring the first device to perform uplink communication over a local wireless communication interface using communication with the second device.

The first device may be the communication hub, in which case the second device is the end device, wherein the configuring comprises configuring the first device to perform downlink communication to the second device over a local wireless communication interface using communication with the second device.

The method may be repeated for a plurality of second devices being respective end devices, in which case the determining the current configuration status comprises determining the current configuration status for all end devices for which the communication hub is configured to communicate with.

The communication between the first device and the second device may comply with IEEE, Institute of Electrical and Electronics Engineers, 802.15.4 or Bluetooth Low Energy, BLE.

According to a third aspect, it is provided a first device for configuring communication between the first device and a second device, the first device being one of an end device and a communication hub, and the second device being the other of the end device and the communication hub, wherein the first device and the second device are both part of an access control system. The first device comprises: processing circuitry; and memory circuitry storing instructions that, when executed by the processing circuitry, cause the first device to: obtain configuration data comprising a first group identifier, being a group identifier for the first device; configure the first device to be associated with the first group identifier; obtain a second group identifier by communicating, over a wireless communication link, with the second device, wherein the second group identifier is a group identifier for the second device; determine that the first group identifier and the second group identifier match; and configure the first device to perform future communication with the second device over a local wireless communication interface.

According to a fourth aspect, it is provided a computer program for configuring communication between a first device and a second device, the first device being one of an end device and a communication hub, and the second device being the other of the end device and the communication hub, wherein the first device and the second device are both part of an access control system. The computer program comprises computer program code which, when executed on the first device causes the first device to: obtain configuration data comprising a first group identifier, being a group identifier for the first device; configure the first device to be associated with the first group identifier; obtain a second group identifier by communicating, over a wireless communication link, with the second device, wherein the second group identifier is a group identifier for the second device; determine that the first group identifier and the second group identifier match; and configure the first device to perform future communication with the second device over a local wireless communication interface, using communication with the second device.

According to a fifth aspect, it is provided a computer program product comprising a computer program according to the fourth aspect and a computer readable means comprising non-transitory memory in which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic diagram illustrating an environment in which embodiments presented herein can be applied;
Fig 2 is a schematic architectural view of a system according to one embodiment for configuring communication between devices, such as some of the devices of Fig 1;
Fig 3 is a schematic diagram illustrating a topology of devices that can be configured by the system of Fig 2;
Figs 4A-B are schematic diagrams illustrating embodiments of the relationship between the first device, the second device, the end device and the communication hub;
Fig 5 is a swimlane diagram illustrating embodiments of methods for configuring communication between devices, such as some of the devices of Fig 1;
Fig 6 is a schematic diagram illustrating components of the first device and the second device of Fig 4A-B; and
Fig 7 shows one example of a computer program product 90 comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein, end devices (such as electronic locks and sensor devices) and communication hubs are associated (also known as paired) with each other based on a configuration of an access control system that can be performed in advance, prior to the configuration being applied. A configuration device (such as a smartphone) is used to transfer the configuration to each end device and each communication hub. This results in each device being configured to have a group identifier. Once the group identifiers have been configured in the end devices and the communication hubs, a discovery phase starts where each pair of end device and communication hub, having the same group ID, discover each other. When the group identifiers of an end device and communication hub match, communication is thereby configured such that the end device is assigned to the communication hub. With the presented embodiments, the relationship between end devices and communication hubs can be predefined. The configuration is then easily transferred to the devices using the configuration device, after which the topology is set up for communication autonomously. The installer handling the configuration device can perform this task easily and without any manual input, which greatly reduces the risk of any mistakes when the devices are configured. The actual configuration in devices can then be extracted to verify configuration implementation.

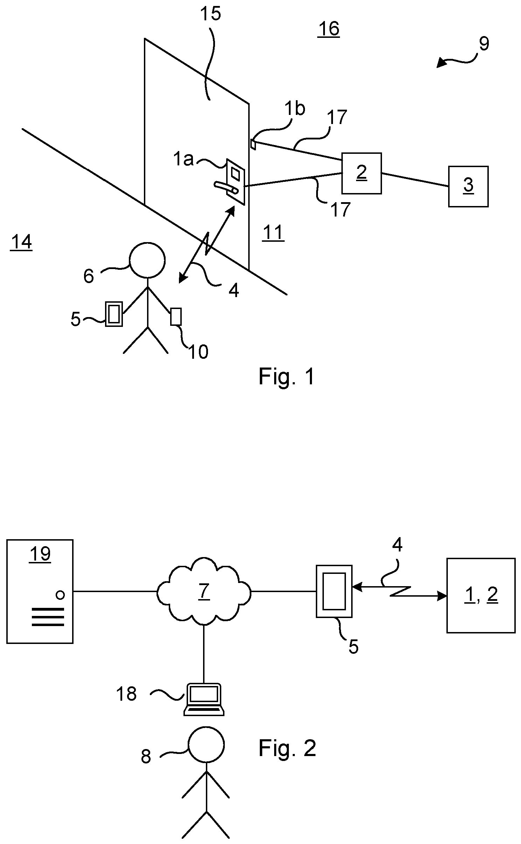

Fig 1 is a schematic diagram showing an environment in which embodiments presented herein can be applied. An access control system 9 is provided for controlling access to a physical space 16, which is restricted by an openable physical barrier 15 that is selectively unlockable. The physical barrier 15 stands between the restricted physical space 16 and an accessible physical space 14. Note that the accessible physical space 14 can be a restricted physical space in itself, but in relation to this physical barrier 15, the accessible physical space 14 is accessible. The barrier 15 can be a door, gate, hatch, cabinet door, drawer, window, etc. In order to control access to the physical space 16, by selectively unlocking the barrier 15, an electronic lock 1a is provided.

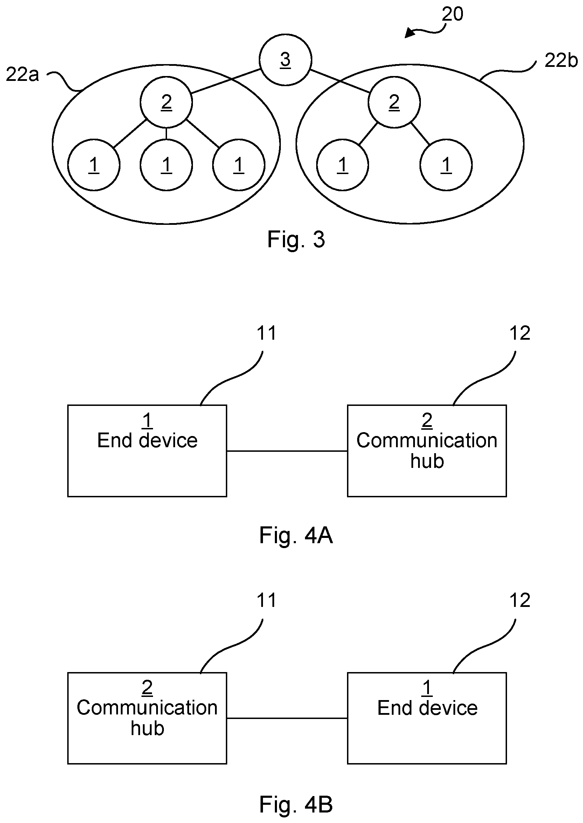

The electronic lock 1a is associated with a communication hub 2. The communication hub 2 allows the electronic lock 1a to communicate with an access controller 3 (or other device) via the communication hub 2. The communication hub 2 could also be a gateway, depending on how many communication protocols it can handle. In relation to the communication hub 2, the electronic lock 1a is an end device, i.e. a leaf node in a hierarchical topology, see Fig 3 and corresponding description below. In the example shown in Fig 1, there is a sensor device 1b that is provided for detecting open/closed status of the barrier 15. The sensor device 1b is also configured to communicate with other devices, such as the controller 3, via the communication hub 2.

The communication hub 2 thus can be associated with multiple end devices, at one or multiple doors, even though a single door is shown in Fig 1.

The electronic lock 1a is controllable to be in a locked state or in an unlocked state based on communication with an electronic key 10, carried by a user 6. The electronic key 10 can be in any suitable format that allows the electronic lock 1a to communicate with the electronic key 10 to allow an access evaluation. For instance, the electronic key 10 can be in the form of a key fob, a key card, a hybrid mechanical/electronic key or embedded in a smartphone. When the user 6 approaches with the electronic key 10, the electronic key 10 communicates with the electronic lock 1a over a local communication interface 4. The communication between the electronic key 10 and the electronic lock 1a can be wireless e.g. be based on Bluetooth Low Energy (BLE), Bluetooth, Ultra-high Frequency (UHF), ZigBee, any of the IEEE 802.15.4 standards, any of the IEEE 802.11 standards, etc. Alternatively or additionally, the local communication interface 4 is a wired interface, e.g. Universal Serial Bus (USB), Ethernet, etc.

The electronic lock 1a can then communicate with the controller 3, so that the controller 3 can make an access decision for the electronic key 10, i.e. determining whether the electronic key 10 is authorised to unlock the electronic lock 1a. The controller 3 communicates its access decision (either access granted, or access denied) back to the electronic lock 1a via the communication hub 2, at which point the electronic lock 1a performs an unlock action or stays locked.

Optionally, the controller 3 is also connected to a wide area network, such as the Internet.

Communication between the end devices 1a-b and the communication hub 2 occur over respective local wireless links 17. The local wireless links 17 can e.g. be based on Bluetooth Low Energy (BLE) or any protocol related to IEEE 802.15.4, such as Zigbee, Thread, Matter, etc.

According to embodiments presented herein, in order to set up an association between an end device 1a, 1b and its communication hub 2, each one of the end devices 1a, 1b as well as the communication hub 2 is configured with a group identifier, also known as group ID herein. The group ID can e.g. be in the form of a number or alphanumeric string that uniquely identifies each group within the access control system. As explained in more detail below, once the group IDs have been configured, the communication hub 2 and the end devices 1 will discover each other and associate if they belong to the same group (i.e. that they are configurated with the same group ID), such that each end device 1a, 1b only communicates with the communication hub 2 with a matching group ID.

In order to configure the end devices 1 and the communication hub 2, a configuration device 5 is provided. The configuration device 5 can be any suitable portable computing device, e.g. a smartphone, a tablet computer, a laptop computer or a wearable device. A user 6, which may be an installer in this case, carries the configuration device 5, and when the configuration device 5 is in proximity with an end device 1a, 1b, the configuration (including group ID for the end device in question) is transferred from the configuration device 5 to the end device 1a, 1b in question over the local communication interface 4. The communication hub 2 is configured in the same manner.

The configuration device 5 and the electronic key 10 can be separate devices (as shown in Fig 1 to clarify the different roles), or the configuration device 5 and the electronic key 10 can be combined in a single physical device (not shown).

Fig 2 is a schematic architectural view of a system according to one embodiment for configuring communication between devices, such as the devices of Fig 1. In order to set up an access control system 9 with multiple end devices 1 and one or more communication hubs 2, each end device 1 will be associated with one communication hub 2 and each communication hub 2 will be associated with one or more end devices 1. This is achieved by defining a group for each communication hub 2 and one or more end devices 1 to be associated with that communication hub 2. This configuration is explicitly defined, instead of the end devices 1 adaptively connecting to a communication hub 2. The reason for the explicit definition is that the configuration reflects a known and defined topology (see Fig 3 and text description below). This topology can then also reflect a physical structure where the access control system 9 is installed, e.g. floors, building sections, buildings, etc.

A planner 8 is a person that configures the access control system 9 using a planner device 18. The planner device 18 is a computing device, e.g. laptop computer, desktop computer, tablet computer, or smartphone, that can communicate with a configuration server 19 over a communication network 7. The communication network 7 can be a wired and/or wireless local network. Alternatively or additionally, the communication network 7 includes a wide area network, such as the Internet, to which the planner device 18 and the configuration server 19 can connect e.g. via Wi-Fi (e.g. any of the IEEE 802.11x standards), Ethernet, or a cellular network, e.g. LTE (Long Term Evolution), next generation mobile networks (fifth generation, 5G), etc.

The configuration is performed by the planner 8 interacting with a planner device 18 to define the groups of the access control system, such that each end device 1 is associated with a group ID and each communication hub 2 is associated with a group ID. The group definition can be performed completely on the planner device 18 and the configuration is then uploaded to the configuration server 19. Alternatively, the group definition can be performed by the planner 8 using the planner device 18 to interactively define the groups on the configuration server 19, e.g. by the configuration server 19 providing a web server that the planner device 18 accesses using a web browser on the planner device 18 (or other client/server implementation).

Once the configuration is stored by the configuration server 19, it can be transferred to the configuration device 5 via the communication network 7. One or more users with respective configuration devices 5 can then provide the configuration to all the end devices 1 and communication hubs 2 of the access control system 9, such that each such device is configured with its group ID.

As explained in more detail below, each end device 1 then goes through a discovery process, where communication is configured such that it communicates with the communication hub 2 in communication range with a matching group ID.

Fig 3 is a schematic diagram illustrating a topology 20 of devices of the access control system 9 that can be configured by the system of Fig 2.

At the lowest level, end devices 1 can be seen. In this topology, the end devices 1 are leaf nodes. The end devices 1 can be any type of device provided in an access control system environment, e.g. a lock, an access control reader, a sensor device, or a camera device.

On the next level above, communication hubs 2 are provided. As mentioned above, each hub is configured to be in the same group as one or more end devices 1. In this example a first group 22a comprises one of the communication hubs 2 and three end devices 1. A second group 22b comprises the other communication hub 2 and two end devices 1. Both communication hubs 2 are, in turn, connected to the controller 3.

The topology 20 illustrated in Fig 3 is one example of a configuration of an access control system 9.

It is to be noted that the number of end devices 1 associated with each communication hub 2 can vary considerably depending on how the access control system 9 is planned to be installed.

Figs 4A-B are schematic diagrams illustrating embodiments of the relationship between the first device, the second device, the end device and the communication hub. In an embodiment illustrated by Fig 4A, the end device 1 is the first device 11 and the communication hub 2 is the second device 12. In an embodiment illustrated by Fig 4B, the communication hub 2 is the first device 11 and the end device 1 is the second device 12.

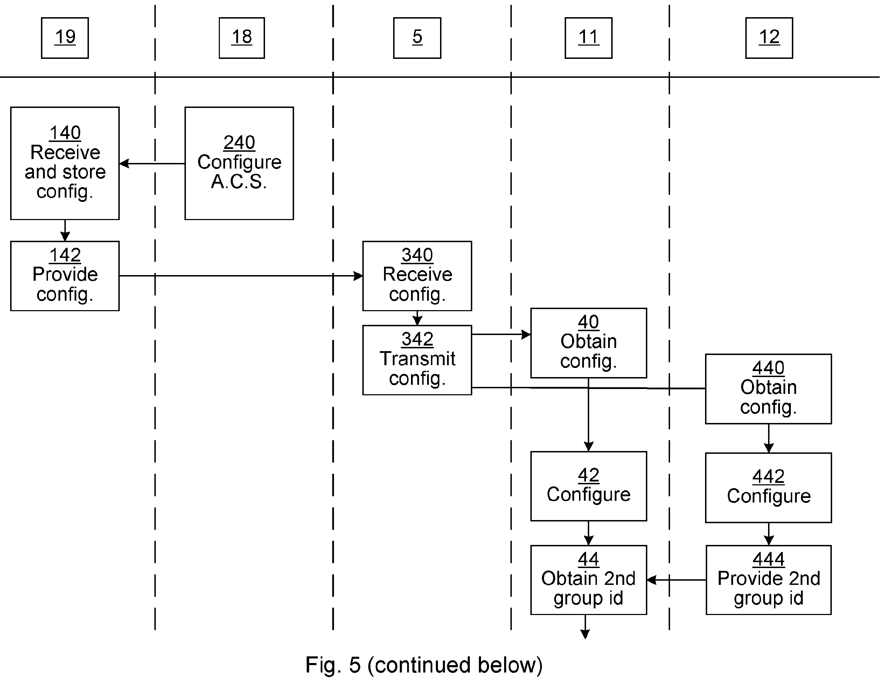

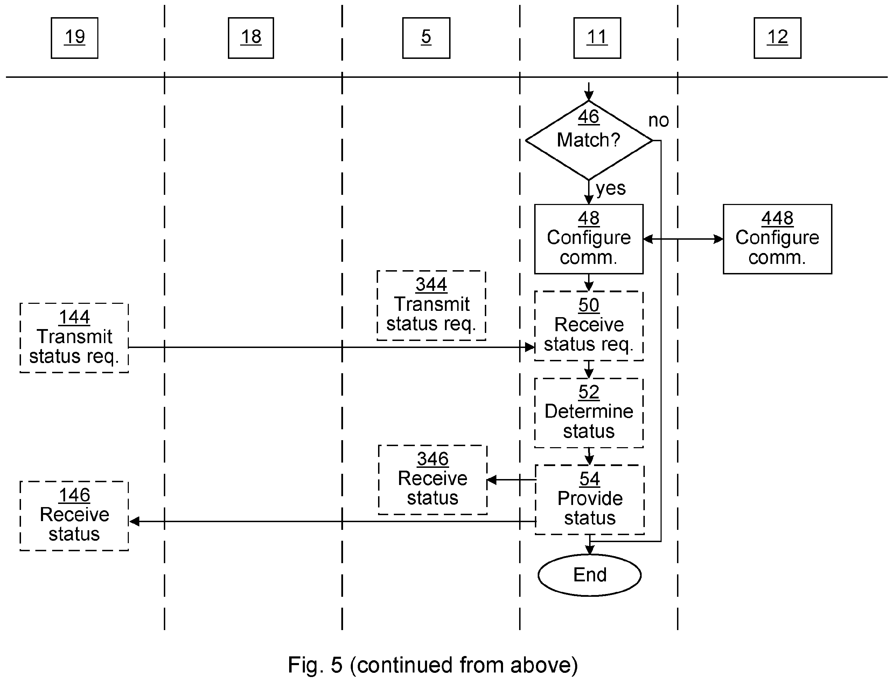

Fig 5 is a swimlane diagram illustrating embodiments of methods for configuring communication between the first device 11 and the second device 12. As explained above, the first device 11 is one of an end device 1 and a communication hub 2, and the second device 12 is the other of the end device 1 and the communication hub 2. In other words, the first device 11 is the end device 1 and the second device 12 is the communication hub 2, or the first device 11 is the communication hub 2 and the second device 12 is the end device 1. Both the first device 11 and the second device 12 are part of the access control system 9. As explained above, the end device 1 can e.g. be one of: an electronic lock, an access control reader, a sensor device, and a camera device.

Fig 5 will first be described on a general level, after which a couple of illustratory examples will be presented for better understanding of embodiment presented herein.

In a *configure A.C.S* (Access Control System) step 240, the planner device 18 is used to configure the access control system, as explained with reference to Fig 2 above. This results in configuration that is transmitted to the configuration server 19. The configuration comprises definitions of groups where each communication hub 2 is defined to belong to a group identifier and each end device 1 is defined to belong to a group. Each group comprises at least one communication hub 2 and at least one end device 1.

An illustratory example of a configuration is shown in Table 1:

**Table 1: Example configuration**

| **Type** | **Friendly Name** | **Associated hub** | **Group ID** |
|---|---|---|---|
| End device | Floor1_door1 | Floor1_hub1 | 1 |
| End device | Floor1_door2 | Floor1_hub1 | 1 |
| End device | Floor1_door3 | Floor1_hub1 | 1 |
| End device | Floor2_door1 | Floor2_hub2 | 2 |
| End device | Floor2_door2 | Floor2_hub2 | 2 |
| End device | Floor2_door3 | Floor2_hub2 | 2 |
| End device | Floor2_door4 | Floor2_hub2 | 2 |
| Hub | Floor1_hub1 | | 1 |
| Hub | Floor2_hub2 | | 2 |

In Table 1, the first column defines the type of device. Optionally, the type can be more granular, such as instead of "End device" the type could be "Lock", "Door sensor", etc. The second column is a friendly name that is unique for each device. The friendly name is a name that allows an installer to identify a location of the end device in question. The third column defines, for end devices, which communication hub to connect to. The fourth column defines which group ID is defined for each device. The group is defined for each communication hub and is derived for each end device based on the associated hub.

The value for the group ID can be generated by the planner device 18 or the configuration server 19 during the act of the planner 8 performing the configuration. For instance, the planner 8 can select a communication hub 2 based on its friendly name (e.g. "floor 1, first hub to left, clockwise from stairs") or based on its location on a map. Once a communication hub 2 is selected, the planner selects the end devices 1 that should be associated with the communication hub 2. A unique group ID can then be generated by the planner device 18 or the configuration server 19 to define the group for the communication hub 2 and the associated end devices 1. This group ID is then used in the configuration to associate the communication between the hub 2 and the end devices 1 as described in more detail below.

It is to be noted that the configuration Table 1 includes more information than is necessary. At a minimum, the configuration comprises an identifier of each device and group IDs for each device that is configured.

In a *receive and store config* step 140, the configuration server 19 receives the configuration from the planner device 18 and stores this, locally or remotely, where it is accessible to the configuration server 19. In accordance with what is mentioned above, the configuration server 19 can receive the configuration interactively, e.g. through a web interface, or as a complete configuration at once from the planner device 18.

In a *provide config* step 142, the configuration server 19 provides the configuration to the configuration device 5. As explained above, the configuration device 5 can e.g. be a smartphone or other portable computing device, with an appropriate application installed for configuring devices of an access control system. The configuration provided to the configuration device 5 can be the entire configuration or a subset of the configuration, e.g. for a selected geographic section of the access control system 9, such as a particular floor to be installed or a particular building to be installed. The configuration comprises associations between at least one end device 1 and a group ID and at least one communication hub 2 and a group ID.

In a *receive config* step 340, the configuration device 5 receives the configuration from the configuration server 19. This can occur when the configuration device 5 is able to communicate with the configuration server 19. After the configuration is received, it can be stored locally within the configuration device 5. In this way, when the configuration will be sent to the devices, the configuration device 5 can be offline.

In a *transmit config* step 342, the configuration device 5 transmits the configuration to the first device 11 and/or the second device 12, herein denoted a target device. The transmission of configuration can occur when the configuration device 5 is in local communication with the target device. The configuration is in line with the configuration of a topology 20 of the access control system 9. Hence, the configuration comprises group identifiers for the end devices 1 and the communication hubs 2. In practice, this can be implemented by the installer carrying the configuration device 5 walking up to a target device to configure, selecting the appropriate device in the application on the configuration device 5, and triggering the transfer to occur to the target device. When the configuration has been transferred and optionally confirmed by the target device to the configuration device 5, the target device can be removed from a list of remaining target devices to configure that is maintained in the application on the configuration device 5. The installer can select the target device to configure based on the friendly name in the configuration, see second column in Table 1. For instance, when walking up to the lock for the second door on floor 1, the installer selects the configuration for "Floor1_door2" to be applied. The friendly name is then sufficiently defined for the installer to identify the target device.

Each target device can have a unique device identity that is known to the target device itself. Such a unique identity can e.g. be a MAC (Media Access Control) address of the target device.

In one embodiment, the unique device identity of each target device is not known at the time of configuration. In this case, it is the installer who identifies each target device (based for example on the friendly name) and select appropriate configuration to apply. In this embodiment, the physical installation can occur using generic devices, whose unique device identity does not need to be known before configuration.

In one embodiment, the unique device identity of each target device is known at the time of configuration. In such a case, the installer does not need to select the configuration to apply.

In one embodiment, the configuration device 5 first queries the unique device identity of the target device with which the configuration 5 is in local communication with. The configuration device 5 then finds the group ID for the target device that the configuration device 5 is in communication with and transmits only this part of the communication. This embodiment reduces the amount of data that is transmitted to the target device.

In an *obtain config* step 40, the first device 11 obtains the configuration data from the configuration device 5. The configuration data comprises a first group identifier, being a group identifier for the first device 11. The configuration data can be obtained over a local communication interface 4 (see Fig 1 and corresponding text above) from the configuration device 5.

In a *configure* step 42, the first device 11 configures itself to be associated with the first group ID. Once the group ID has been configured in the first device 11, the first device 11 enters a discovery phase, for finding any second device 12 with a matching group ID.

In an *obtain config* step 440, the second device 12, in analogy with the *obtain config* step 40 for the first device 11, the second device 12 obtains configuration data comprising a second group identifier, being a group identifier for the second device 12. This can be obtained by receiving the configuration data from the configuration device 5 over the local communication interface 4.

In a *configure* step 442, the second device 12 configures itself to be associated with the second group ID. Once the group ID has been configured in the second device 12, the second device 12 enters a discovery phase, for associating with a first device of the same group ID.

In a provide 2^{nd} group ID step 444, the second device 12 provides the second group identifier to the first device 11. This can e.g. be transmitted using a broadcast transmission, in order to not depend on the first device 11 and the second device 12 being configured for mutual communication yet.

In one embodiment, the second group identifier is transmitted to the first device 11 in a broadcast message, i.e. the broadcast message comprises the second group identifier.

In an *obtain ₂^{nd} group ID* step 44, the first device 11 obtains the second group identifier by communicating, over a wireless communication link, with the second device 12.

In one embodiment, the first device 11 first transmits a request to the second device 12 to send its group identifier, after which the second device 12 performs the *provide ₂^{nd} group ID* step 444, see e.g. the second illustratory example described above for communication according to IEEE 802.15.4.

In a conditional *match* step 46, the first device 11 determines whether the first group identifier and the second group identifier match. If there is a match, the method proceeds to a *configure communication* step 48. Otherwise, the method ends.

In the *configure communication* step 48, the first device 11 configures itself to perform future communication with the second device 12 over a local wireless communication interface.

The communication between the first device 11 and the second device 12 can be comply with any suitable protocol, e.g. IEEE 802.15.4 or Bluetooth Low Energy, BLE.

When the first device 11 is the end device 1 and the second device 12 is the communication hub 2, the configuring comprises configuring the end device 1 to perform uplink communication over a local wireless communication interface using communication with the communication hub 2.

When the first device 11 is the communication hub 2 and the second device 12 is the end device 1, the configuring comprises configuring the communication hub 2 to perform downlink communication to the end device 1 over a local wireless communication interface using communication with the end device 1.

In a *configure communication* step 448, which corresponds to the *configure communication* step 48, but for the second device 12, the second device 12 configures itself to perform future communication with the first device 11 over a local communication interface with the first device 11. In other words, the first device 11 and the second device 12 cooperate such that they are configured to perform communication with each other over the local communication interface.

After the *configuration communication* steps 48, 448, the first device 11 and the second device 12 are associated with each other such that all communication from the end device 1 in question (either the first device 11 or the second device 12) occurs via the communication hub 2 in question (the other of the first device 11 and the second device 12).

The process can then be repeated for multiple end devices 1 and/or communication hubs 2 until all devices that should be configured have been configured. It is to be noted that the installer is not bound to following a particular order when configuring the devices. Once this is done, the discovery phase is finished.

Optionally, a verification phase can then be started where the actual configuration of devices is retrieved for verification.

In an optional *transmit status req.* step 344, the configuration device 5 transmits a status request to the first device 11.

In an optional *transmit status req.* step 144, the configuration server 19 transmits a status request to the first device 11.

In an optional *receive status req.* step 50, the first device 11 receives a status request, being a request for a configuration status.

In an optional *determine status* step 52, the first device 11 determines a current configuration status. This configuration status specifies that the first device 11 is configured to perform communication with the second device 12, i.e. that the first device 11 is associated with the second device 12. This specification can e.g. be expressed as the group identifiers of the configuration. Alternatively, when the first device 11 is an end device 1, the configuration status comprises an identifier of the communication hub 2 that each end device 1 is configured to communicate with. When the first device 11 is a communication hub 2, the configuration status can comprise identifier(s) of the end devices 1 that each communication hub 2 is configured to communicate with.

If the retrieved status for all communication hubs is retrieved and this matches the configuration, e.g. as exemplified in Table 1, it can be deduced that the defined configuration has been applied successfully. Alternatively or additionally, the status is obtained from all end devices 1 to determine the communication hub 2 that each end device 1 is associated with. Again, the result can be compared with the configuration to see if the topology of the configuration has been applied.

In an optional *provide status* step 54, the first device 11 provides the current configuration status to the entity that transmitted the status request, i.e. to either the configuration server 19 or the configuration device 5.

In an optional *receive status* step 346, the configuration device 5 receives the current configuration status from the first device 11.

In an optional *receive status* step 146, the configuration server 19 receives the current configuration status from the first device 11.

The method can be repeated for a plurality of second devices 12 (end devices 1). In this case, *determine status* step 52 comprises determining the current configuration status for all end devices 1 for which the communication hub 2 is configured to communicate with.

An illustratory first example will now be presented for a configuration of an access control system 9 referring to the steps in Fig 5. In this example, the first device 11 is the end device(s) 1 and the second device 12 is the communication hub 2.

A new access control system is to be set up. The planner 8 configures the access control system using the planner device 18 in step 240. This includes defining groups such that each end device 1 is associated with a communication hub 2 using a group ID. In other words, each end device 1 is assigned a group ID and each communication hub 2 is assigned a group ID.

The configuration is stored by the configuration server 19 in step 140. The configuration is then loaded to the configuration device 5 in steps 142 and 340. When an installer carrying the configuration device 5 is in proximity with an end device 1 (first device 11 in this example), the group ID of the end device 1 in question is transferred from the configuration device 5 to the end device 1 in steps 342 and 40. The end device 1 then configures (i.e. sets) its group ID in step 42. Steps 342, 40 and 42 are repeated for all end devices that the configuration device 5 should configure. Similarly, the configuration device 5 transfers the group ID to the communication hub 2 (second device 12 in this example) in steps 342 and 440, after which the communication hub 2 configures its group ID in step 442. Steps 342, 440 and 442 are also repeated for all communication hubs 2 that the configuration device 5 should configure. The order in which the devices 1 or 2 are configured is not important.

Once all devices that should be configured are configured with their respective group IDs, the devices will find matching group IDs of other devices. In particular, each end device 1 aims to find in its communication range a communication hub 2 with a matching group ID, and each communication hub 2 aims to find end devices 1 that share the same group ID. This occurs in steps 44, 444, 46, 48 and 448 without the need for any user interaction. More specifically, the communication hub 2 sends out its group ID in step 444, which is received by the end device 1 in step 44. The end device 1 checks for a group ID match in step 46, which, when a match occurs, results in that the communication is configured in step 48 to occur via the communication hub 2 with the matching group ID. After this, the communication structure defined in the configuration is set up. Looking now into details on how this can be implemented based on the family of IEEE 802.15.4 protocols, the end device 1 first sends out a message indicating that it is not associated with any communication hub 2 yet. The communication hub 2 receives this message, and responds with a message indicating its group ID. The end device 1 then receives the group ID of the communication hub 2, and when this matches, proceeds to associate with the communication hub 2 for further communication.

An illustratory second example will now be presented for a configuration of an access control system 9 referring to the steps in Fig 5. In this example, the first device 11 is the communication hub 2 and the second device 12 is the end device(s) 1. This example is very similar to the first example. However, in the second example, it is the communication hub 2 (here the first device 11) that receives the group ID in step 44 from the end device 1 (here the second device 12) and determines whether the group IDs match in step 46. In this example, step 444 comprises the end devices 1 transmitting their group IDs, e.g. in a Bluetooth advertising message. Such a message is transmitted as a broadcast message, and does not depend on the transmitter and receiver being previously associated for communication. After the communication hub 2 finds a match of group ID in step 46, the communication hub 2 can associate with the end device 1, e.g. by storing the BLE MAC address of the end device 1 with the group ID that match the one of the communication hub 2.

In embodiments presented herein, it is also convenient to add new devices to the access control system 9, for example for replacing one of the installed devices. The same procedure as presented above is followed for any new devices that are added, with the difference that only the new devices need to undergo the configuration steps (40, 42, 440, 442), and that only the new devices and their intended associated devices need to undergo the discovery steps (44, 46, 48, 444, 448)

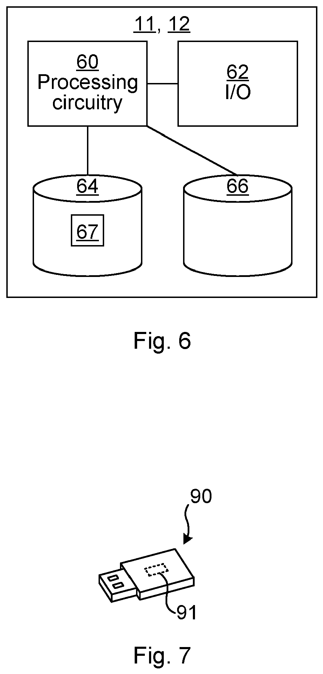

Fig 6 is a schematic diagram illustrating components of the first device 11 and the second device 12 of Fig 4A-B. Processing circuitry 60 is provided using any combination of one or more of a suitable central processing unit (CPU), graphics processing unit (GPU), multiprocessor, neural processing unit (NPU), microcontroller, digital signal processor (DSP), etc., capable of executing software instructions 67 stored in memory circuitry 64, which can thus be a computer program product. The processing circuitry 60 could alternatively be implemented using an application specific integrated circuit (ASIC), field programmable gate array (FPGA), etc. The processing circuitry 60 can be configured to execute methods described with reference to Fig 5 above.

The memory circuitry 64 can be any combination of random-access memory (RAM) and/or read-only memory (ROM). The memory circuitry 64 also comprises non-transitory persistent storage, which, for example, can be any single one or combination of magnetic memory, optical memory, solid-state memory or even remotely mounted memory.

A data memory 66 is also provided for reading and/or storing data during execution of software instructions in the processing circuitry 60. The data memory 66 can be any combination of RAM and/or ROM.

An I/O interface 62 is provided for communicating with external and/or internal entities. Other components are omitted in order not to obscure the concepts presented herein.

Fig 7 shows one example of a computer program product 90 comprising computer readable means. On this computer readable means, a computer program 91 can be stored in a non-transitory memory. The computer program can cause processing circuitry to execute a method according to embodiments described herein. In this example, the computer program product 90 is in the form of a removable solid-state memory, e.g. a Universal Serial Bus (USB) drive. As explained above, the computer program product could also be embodied in a memory of a device, such as the computer program product 64 of Fig 6. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for configuring communication between a first device (11) and a second device (12), the first device (11) being one of an end device (1) and a communication hub (2), and the second device (12) being the other of the end device (1) and the communication hub (2), wherein the first device (11) and the second device (12) are both part of an access control system (9), the method comprising:
obtaining (40), by the first device (11), configuration data comprising a first group identifier, being a group identifier for the first device (11);
configuring (42), by the first device (11), the first device (11) to be associated with the first group identifier;
obtaining (440), by the second device (12), configuration data comprising a second group identifier, being a group identifier for the second device (12);
configuring (442), by the second device (12), the second device (12) to be associated with the second group identifier;
obtaining (44), by the first device (11), the second group identifier by communicating, over a wireless communication link, with the second device (12);
determining (46) that the first group identifier and the second group identifier match;
configuring (48), by the first device (11), the first device (11) to perform future communication with the second device (12) over a local wireless communication interface; and
configuring (448), by the second device (12), the second device (12) to perform future communication with the first device (11) over the local wireless communication interface.

2. A method for configuring communication between a first device (11) and a second device (12), the first device (11) being one of an end device (1) and a communication hub (2), and the second device (12) being the other of the end device (1) and the communication hub (2), wherein the first device (11) and the second device (12) are both part of an access control system (9), the method being performed by the first device (11), the method comprising:
obtaining (40) configuration data comprising a first group identifier, being a group identifier for the first device (11);
configuring (42) the first device (11) to be associated with the first group identifier;
obtaining (44) a second group identifier by communicating, over a wireless communication link, with the second device (12), wherein the second group identifier is a group identifier for the second device (12);
determining (46) that the first group identifier and the second group identifier match; and
configuring (48) the first device (11) to perform future communication with the second device (12) over a local wireless communication interface.

3. The method according to claim 2, wherein the obtaining (40) configuration data comprises obtaining configuration data over a local communication interface from a configuration device (5).

4. The method according to claim 2 or 3, wherein the communicating (44) to obtain the second group identifier comprises transmitting a request to the second device (12).

5. The method according to claim 2 or 3, wherein the communicating (44) to obtain the second group identifier comprises receiving a broadcast message from the second device (12), wherein the broadcast message comprises the second group identifier.

6. The method according to any one of claims 2 to 5, wherein the group identifiers of the first device (11) and the second device (12) are part of a configuration of a topology (20) of the access control system (9).

7. The method according to any one of claims 2 to 6, wherein the end device (1) is one of: an electronic lock, an access control reader, a sensor device, and a camera device.

8. The method according to any one of claims 2 to 7, further comprising:
receiving (50) a request for a configuration status;
determining (52) a current configuration status, specifying that the first device (11) is configured to perform communication with the second device (12); and
providing (54) the current configuration status.

9. The method according to any one of claims 2 to 8, wherein the first device (11) is the end device (1) and the second device (12) is the communication hub (2), wherein the configuring (48) comprises configuring the first device (11) to perform uplink communication over a local wireless communication interface using communication with the second device (12).

10. The method according to any one of claims 2 to 8, wherein the first device (11) is the communication hub (2) and the second device (12) is the end device (1), wherein the configuring (48) comprises configuring the first device (11) to perform downlink communication to the second device over a local wireless communication interface using communication with the second device.

11. The method according to claim 10 when dependent on claim 8, wherein the method is repeated for a plurality of second devices (12) being respective end devices (1), and the determining (52) the current configuration status comprises determining the current configuration status for all end devices (1) for which the communication hub (2) is configured to communicate with.

12. The method according to any one of claims 2 to 11, wherein the communication between the first device (11) and the second device (12) complies with IEEE, Institute of Electrical and Electronics Engineers, 802.15.4 or Bluetooth Low Energy, BLE.

13. A first device (11) for configuring communication between the first device (11) and a second device (12), the first device (11) being one of an end device (1) and a communication hub (2), and the second device (12) being the other of the end device (1) and the communication hub (2), wherein the first device (11) and the second device (12) are both part of an access control system (9), the first device (11) comprising:
processing circuitry (60); and
memory circuitry (64) storing instructions (67) that, when executed by the processing circuitry, cause the first device (11) to:
obtain configuration data comprising a first group identifier, being a group identifier for the first device (11);
configure the first device (11) to be associated with the first group identifier;
obtain a second group identifier by communicating, over a wireless communication link, with the second device (12), wherein the second group identifier is a group identifier for the second device (12);
determine that the first group identifier and the second group identifier match; and
configure the first device (11) to perform future communication with the second device (12) over a local wireless communication interface.

14. A computer program (67, 91) for configuring communication between a first device (11) and a second device (12), the first device (11) being one of an end device (1) and a communication hub (2), and the second device (12) being the other of the end device (1) and the communication hub (2), wherein the first device (11) and the second device (12) are both part of an access control system (9), the computer program comprising computer program code which, when executed on the first device (11) causes the first device (11) to:
obtain configuration data comprising a first group identifier, being a group identifier for the first device (11);
configure the first device (11) to be associated with the first group identifier;
obtain a second group identifier by communicating, over a wireless communication link, with the second device (12), wherein the second group identifier is a group identifier for the second device (12);
determine that the first group identifier and the second group identifier match; and
configure the first device (11) to perform future communication with the second device (12) over a local wireless communication interface, using communication with the second device (12).

15. A computer program product (64, 90) comprising a computer program according to claim 14 and a computer readable means comprising non-transitory memory in which the computer program is stored.
